# FASCICULE DE BREVET EUROPEEN

(11) **EP 3 559 118 B1**
(45) Date de publication et mention de la délivrance du brevet: **09.09.2020**
(21) Numéro de dépôt: 17828959.1
(22) Date de dépôt: 18.12.2017
(51) Int. Cl.: C08L 83/14, C08L 33/04

(54) **ALLIAGE DE POLYMERES NANOSTRUCTURE A ABSORPTION DE CHOCS**
STOSSDÄMPFENDE NANOSTRUKTURIERTE POLYMERLEGIERUNG
SHOCK-ABSORBING NANOSTRUCTURED POLYMER ALLOY

(30) Priorité: 21.12.2016 FR 1663085
(43) Date de publication de la demande: 30.10.2019
(73) Titulaire: Rheonova, 38000 Grenoble (FR); Centre National de la Recherche Scientifique, 75016 Paris (FR)
(72) Inventeur: PATARIN, Jérémy, 38000 Grenoble (FR); DARSY,Guillaume, 38000 Grenoble (FR); RHARBI, Yahya, 38600 Fontaine (FR)
(74) Mandataire: Regimbeau
(86) Numéro de dépôt international: PCT/FR2017/053645
(87) Numéro de publication internationale: WO 2018/115677

(56) Documents cités:
- WO-A2-03/055339
- CN-A- 106 147 603

## Description

### DOMAINE DE L'INVENTION

La présente invention concerne un alliage de polymères nanostructuré à absorption de chocs. Un tel alliage nanostructuré trouve de nombreuses applications, notamment en ce qui concerne les équipements de protection contre les chocs.

### ETAT DE LA TECHNIQUE

Certains matériaux se comportent différemment des matériaux « conventionnels » face aux chocs. Ces matériaux sont couramment désignés en tant que « matériaux viscoélastiques ». Il s'agit de matériaux dont la viscosité et l'élasticité augmente en fonction de la contrainte de cisaillement et de la fréquence de sollicitation croissantes, notamment lors de chocs.

On précise que la notion de « chocs » est à interpréter au sens large. L'absorption de chocs correspond de manière générale à l'absorption de l'énergie mécanique reçue par le matériau, que l'énergie soit appliquée directement en un point du matériau (collision d'un objet contre le matériau par exemple), ou bien que l'énergie émane du milieu extérieur avant d'être appliquée sur le matériau (vibrations extérieure transmises au matériau par exemple). Dans la suite du présent texte, on parlera ainsi pour simplifier de « matériau à absorption de chocs ».

Cette capacité des matériaux à absorption de chocs à devenir plus résistants au fur et à mesure qu'ils sont sollicités mécaniquement offre de nombreuses possibilités dans les domaines des composites, des équipements instrumentaux, de la protection et de la sécurité des individus.

Des dispositifs de protection fabriqués en matériaux à absorption de chocs à base de mousse élastomère ou autres matériaux compressibles et résistants, ont été développés. Cependant, ils sont généralement associés à un matériau rigide dont le rôle est de répartir l'énergie sur une grande surface afin d'en réduire les effets, rendant de tels dispositifs inconfortables et inadaptés pour être utilisés, notamment lorsqu'ils sont destinés à être revêtus par un individu.

Plus récemment ont été développés des matériaux à absorption de chocs à base de silicone. Ils ne sont cependant pas autoporteurs et doivent donc être contenus dans une enveloppe qui assure leur maintien structurel, ce qui engendre des difficultés de conception et d'utilisation de ces matériaux.

Le document US 2005/037189 propose ainsi un matériau formé d'une matrice polymère moussée dans laquelle est dispersée un silicone fluide. Mais la présence de la matrice polymère moussée rend le matériau très peu flexible et non adapté à la fabrication de dispositif de protection ou de sécurité pour un individu, ce dernier étant limité dans ses mouvements. Le format de plaque moussé limite les possibilités d'incorporation dans des systèmes (composites, vêtements, protections,...).

Par ailleurs, la matrice polymère moussée rend également difficile voire impossible la fabrication de tissus à propriétés d'absorption de chocs.

Afin de résoudre ce problème de flexibilité, le document US 2012/142239 propose une composition comprenant un élastomère ayant un module élevé à élongation maximale, et un silicone. Cependant, bien que plus flexible, le matériau fabriqué avec une telle composition élastomère-silicone manque de tenue mécanique et offre des performances d'absorption de chocs insuffisantes dans le cas d'une forte sollicitation mécanique.

Le document WO 03/055339 porte sur des matériaux à absorption de chocs et décrit un matériau composite comprenant une matrice rigide, de préférence élastomérique et un PBDMS dispersé dans cette matrice. La seule matrice explicitement décrite est en polyuréthane

### EXPOSE DE L'INVENTION

L'invention a donc pour but de remédier aux inconvénients de l'art antérieur en proposant un matériau possédant de bonnes propriétés d'absorption des chocs.

L'invention vise également à fournir un matériau à absorption de chocs compact, versatile dans les possibilités de mise en forme, et qui peut être aisément mis en forme.

Un autre but de l'invention est de fournir un équipement fabriqué avec un tel matériau à absorption de chocs, destiné à être utilisé voire porté par un individu, qui n'entrave pas ses mouvements et ne le gêne pas dans ses activités.

A cette fin, selon un premier aspect, l'invention propose un alliage de polymères nanostructuré à absorption de chocs, comprenant :
- une matrice polymère (méth)acrylique comprenant un ou plusieurs polymère(s) (méth)acrylique(s), ladite matrice polymère (méth)acrylique formant un réseau (méth)acrylique, et,
- au moins un polyborodiméthylsiloxane (PBDMS) réparti dans la matrice polymère (méth)acrylique, le polyborodiméthylsiloxane formant un réseau,
le réseau de polyborodiméthylsiloxane et le réseau (méth)acrylique étant imbriqués l'un dans l'autre.

Selon d'autres aspects, l'alliage nanostructuré proposé présente les différentes caractéristiques suivantes prises seules ou selon leurs combinaisons techniquement possibles :
- la matrice polymère (méth)acrylique forme un réseau (méth)acrylique réticulé ;
- le polymère (méth)acrylique est un polyacrylate d'alkyle ou un polyméthacrylate d'alkyle choisi parmi : le polyméthacrylate de méthyle, le polyméthacrylate d'éthyle, le polyacrylate de méthyle, le polyacrylate d'éthyle, le polyacrylate de butyle, le polyméthacrylate de butyle, et leurs mélanges.

L'invention propose également une composition chimique pour la fabrication d'un alliage de polymères nanostructuré à absorption de chocs tel que décrit précédemment, caractérisée en ce qu'elle comprend :
- un mélange de monomère (méth)acrylique comprenant un ou plusieurs monomère(s) (méth)acrylique(s),
- au moins un polyborodiméthylsiloxane (PBDMS),
- au moins un amorceur de polymérisation, destiné à amorcer la polymérisation du mélange de monomère (méth)acrylique afin de former une matrice polymère (méth)acrylique.

Selon d'autres aspects, la composition chimique proposée présente les différentes caractéristiques suivantes prises seules ou selon leurs combinaisons techniquement possibles :
- la composition chimique comprend en outre au moins un agent réticulant, destiné à former des liaisons chimiques entre les chaines polymères de la matrice polymère (méth)acrylique afin que ladite matrice polymère (méth)acrylique forme un réseau (méth)acrylique réticulé ;
- le ratio massique de la masse de monomère (méth)acrylique par rapport à la somme des masses du monomère (méth)acrylique et du polyborodiméthylsiloxane (PBDMS) est compris entre 30% et 70% ;
- le ratio massique de la masse de polyborodiméthylsiloxane (PBDMS) par rapport à la somme des masses du monomère (méth)acrylique et du polyborodiméthylsiloxane (PBDMS) est compris entre 30% et 70% ;
- le polyborodiméthylsiloxane (PBDMS) et le monomère (méth)acrylique sont en proportion massique de 30% / 70% respectivement l'un par rapport à l'autre ;
- la teneur de l'agent réticulant est comprise entre 1% et 10% en masse, par rapport à la masse de la matrice monomère (méth)acrylique ;
- l'amorceur de polymérisation est un photoamorceur dont la teneur est comprise entre 0,1% et 5% en masse, par rapport à la masse de la matrice monomère (méth)acrylique.

L'invention propose également un procédé de fabrication d'une pièce en alliage nanostructuré à absorption de chocs, à partir de la composition chimique précédente, ainsi qu'à une pièce en alliage nanostructuré obtenue par ce procédé. Ledit procédé de fabrication est caractérisé en ce qu'il comprend les étapes suivantes :
- la polymérisation du mélange monomère (méth)acrylique de la composition chimique pour former un alliage nanostructuré,
- la mise en forme de l'alliage nanostructuré pour obtenir une pièce en alliage nanostructuré.

Selon d'autres aspects, le procédé de fabrication d'une pièce en alliage nanostructuré à absorption de chocs proposé présentes les différentes caractéristiques suivantes prises seules ou selon leurs combinaisons techniquement possibles :
- la mise en forme de l'alliage nanostructuré est réalisée simultanément avec la polymérisation ou postérieurement à la polymérisation du mélange de monomère (méth)acrylique ;
- le procédé comprend en outre une étape de réticulation du ou des polymère(s) (méth)acryliques obtenus par polymérisation du mélange de monomère (méth)acrylique.

L'invention propose également un procédé de fabrication d'une pièce composite, à partir de la composition chimique précédente, ainsi qu'une pièce composite obtenue par ce procédé, et un équipement à absorption de chocs réalisé à partir d'une ou de plusieurs pièce(s) en alliage nanostructuré et/ou d'une ou de plusieurs pièce(s) composite(s). Le procédé de fabrication d'une pièce composite est caractérisé en ce qu'il comprend les étapes suivantes :
- l'imprégnation d'un substrat par la composition chimique,
- la polymérisation du mélange monomère (méth)acrylique de la composition chimique imprégnant le substrat pour former un matériau composite,
- la mise en forme du matériau composite pour obtenir une pièce composite.

Selon d'autres aspects, le procédé de fabrication d'une pièce composite proposé présente les différentes caractéristiques suivantes prises seules ou selon leurs combinaisons techniquement possibles :
- la mise en forme du matériau composite est réalisée simultanément avec l'imprégnation du substrat, ou simultanément avec la polymérisation du mélange monomère (méth)acrylique, ou postérieurement à la polymérisation du mélange monomère (méth)acrylique ;
- l'imprégnation du substrat est réalisée par enduction dudit substrat avec la composition chimique ;
- le procédé comprend en outre une étape de réticulation du ou des polymère(s) (méth)acryliques obtenus par polymérisation du mélange de monomère (méth)acrylique.

### DESCRIPTION DES FIGURES

D'autres avantages et caractéristiques de l'invention apparaîtront à la lecture de la description suivante donnée à titre d'exemple illustratif et non limitatif, en référence aux Figures annexées qui représentent :
- La Figure 1, une photographie de la structure de l'alliage de polymères nanostructuré, obtenue par microscopie électronique à balayage ;
- La Figure 2, un graphe montrant l'évolution des modules G', G" et de tan δ en fonction de la fréquence de sollicitation, pour un tissu de nylon ;
- La Figure 3, un graphe montrant l'évolution des modules G', G" et de tan δ en fonction de la fréquence de sollicitation, pour un tissu d'Elasthanne/Polyéthylène.

### DESCRIPTION DETAILLEE DE L'INVENTION

### L'alliage de polymères nanostructuré

Un premier objet de l'invention concerne un alliage de polymères nanostructuré possédant des propriétés d'absorption des chocs.

L'alliage comprend une matrice polymère (méth)acrylique comprenant un ou plusieurs polymère(s) (méth)acrylique(s).

L'alliage comprend également un polyborodiméthylsiloxane (PBDMS), ce dernier étant réparti dans la matrice polymère (méth)acrylique.

Par « alliage de polymères », on entend une combinaison d'au moins deux polymères non miscibles.

Le terme « nanostructuré » tel qu'utilisé se rapporte à un alliage structuré de PBDMS dans une matrice polymère (méth)acrylique, à l'échelle submicronique (c'est-à-dire inférieure au micromètre), sous la forme d'un réseau (méth)acrylique et d'un réseau de PBDMS imbriqués l'un dans l'autre. Cet aspect sera développé plus en détail dans la suite de la description.

Le terme « monomère » tel qu'utilisé se rapporte à une molécule qui peut subir une polymérisation. En particulier, on comprendra qu'un « monomère » désigne de manière large un motif monomère (ou type de monomère), et non une unique entité monomère en tant que telle.

Le terme « monomère (méth)acrylique » se rapporte à tous types de monomères acryliques et méthacryliques.

Le terme « polymère (méth)acrylique » se rapporte à tous types de polymères acryliques et méthacryliques.

Le terme « polymérisation » tel qu'utilisé se rapporte au procédé de conversion d'un monomère ou d'un mélange de monomères en un polymère.

Le terme « réticulation » tel qu'utilisé se rapporte au procédé de conversion d'un monomère ou d'un mélange de monomères, d'un polymère ou d'un mélange de polymères, en un réseau réticulé.

Le terme « amorceur » tel qu'utilisé se rapporte à une espèce chimique qui, sous l'action d'un stimulus extérieur (par exemple la lumière ou la chaleur) génère un intermédiaire réactionnel issu d'une molécule stable permettant de démarrer la polymérisation des monomères en polymères.

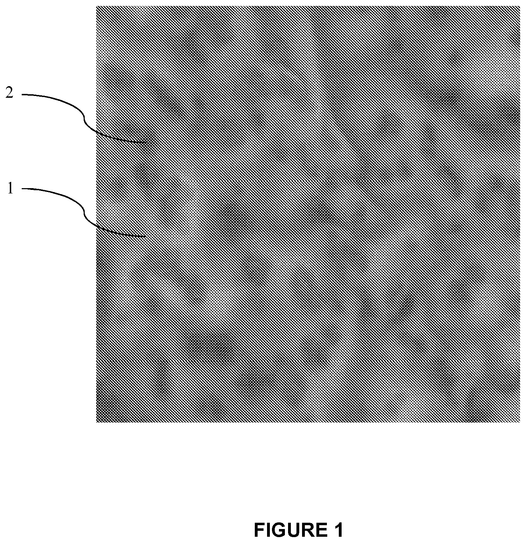

Concernant l'alliage de polymères nanostructuré, celui-ci est formé d'un PBDMS (1) réparti dans une matrice polymère (méth)acrylique (2), comme on peut le voir sur la Figure 1 en analyse microscopie à balayage, sur laquelle le PBDMS (1) apparait clair et la matrice polymère (méth)acrylique (2) apparait sombre.

Le PBDMS (1) joue le rôle de polymère fonctionnel, en ce qu'il donne à l'alliage ses propriétés amortissantes par absorption d'énergie.

Plus précisément, le PBDMS est un composé chimique comprenant du bore sous la forme d'acide borique, et un polydiméthylsiloxane (PDMS), l'acide borique formant des liaisons faibles avec le PDMS. L'acide borique donne au polymère fonctionnel et à l'alliage ses propriétés élastiques, et la chaine de PDMS ses propriétés amortissantes par absorption d'énergie. La formation de liaisons faibles entre l'acide borique et le polydiméthylsiloxane (PDMS) amène le polyborodiméthylsiloxane (PBDMS) à former son propre réseau au sein de la matrice polymère (méth)acrylique dans laquelle il est réparti.

La matrice polymère (méth)acrylique (2) quant à elle joue le rôle de polymère de structure. Elle forme une phase continue assurant la cohésion et la tenue physique de l'alliage.

La matrice polymère (méth)acrylique se présente sous la forme d'un réseau, c'est-à-dire d'une structure macromoléculaire constituée de chaînes polymères entrelacées. De préférence, ce réseau (méth)acrylique est réticulé. Dans ce dernier cas, les chaînes polymères du réseau forment une structure tridimensionnelle et sont reliées entre elles par des liaisons, notamment par des liaisons covalentes, formées grâce à un agent réticulant (appelé également agent pontant).

Lorsque la matrice (méth)acrylique forme un réseau réticulé, elle présente des nœuds de réticulation entre lesquels sont arrangées des chaînes polymères résultant de la polymérisation d'un ou plusieurs monomères. Le réseau (méth)acrylique réticulé est infusible.

Ainsi, l'alliage nanostructuré comprend un premier réseau de polyborodiméthylsiloxane (PBDMS) (1), et un second réseau (méth)acrylique de préférence réticulé formé par la matrice polymère (méth)acrylique (2), le premier et le second réseau étant intimement mêlés, et imbriqués l'un dans l'autre. Autrement dit, les chaînes polymères du réseau (méth)acrylique et les chaînes polymère du réseau de PBDMS s'entrecroisent. Cet ensemble de deux réseaux est structuré à l'échelle nanométrique et constitue un alliage dit « nanostructuré ».

Pour en revenir à la matrice polymère (méth)acrylique, celle-ci comprend un ou plusieurs polymère(s) (méth)acrylique(s) obtenu(s) par polymérisation d'un ou plusieurs monomère(s) (méth)acrylique(s)

L'étape de polymérisation du ou des monomère(s) (méth)acrylique est de préférence accompagnée et/ou suivie d'une étape de réticulation des chaînes polymères (méth)acryliques, afin de former un réseau (méth)acrylique réticulé tel que décrit précédemment. Le réseau (méth)acrylique réticulé est constitué d'une unique macro-chaîne polymère (méth)acrylique formée d'une pluralité de chaînes polymères (méth)acryliques reliées entre elles.

Les polymères (méth)acryliques constitutifs de la matrice polymère (méth)acryliques sont des polymères acryliques et/ou des polymères méthacryliques. Plus particulièrement, il peut s'agir d'homopolymères (méth)acryliques, de copolymères (méth)acryliques, et de leurs mélanges.

Lorsqu'il s'agit de copolymères (méth)acryliques, ce sont notamment des copolymères aléatoires et des copolymères à blocs.

Les copolymères (méth)acryliques peuvent être formés structurellement d'un ou plusieurs polymères (méth)acryliques, ou d'une combinaison d'un ou plusieurs polymères (méth)acryliques et d'un ou plusieurs polymères non (méth)acryliques.

De préférence, le polymère (méth)acrylique est un poly(acrylate d'alkyle) ou un poly(méthacrylate d'alkyle) choisi parmi : le poly(méthacrylate de méthyle), le poly(méthacrylate d'éthyle), le poly(acrylate de méthyle), le poly(acrylate d'éthyle), le poly(acrylate de butyle), le poly(méthacrylate de butyle), et leurs mélanges.

Le polymère (méth)acrylique est de préférence choisi en fonction de la réalisation ou non d'une étape de réticulation consécutive à l'étape de polymérisation.

De préférence, on choisira un polymère possédant des chaînes latérales alkyles d'une longueur optimale pour permettre une excellente imbrication des réseaux du PBDMS et de la matrice polymère (méth)acrylique.

En ce qui concerne le polyborodiméthylsiloxane (PBDMS), il est dit « polymère fonctionnel » en ce qu'il donne à l'alliage ses propriétés élastiques et d'absorption d'énergie. Il est distribué dans la matrice polymère (méth)acrylique.

La structure de l'alliage nanostructuré lui confère de très bonnes propriétés mécaniques d'absorption de chocs, ainsi qu'un caractère autoporteur en ce que sa stabilité est assurée par sa seule structure.

Un avantage de l'alliage réside dans le fait que de bonnes propriétés mécaniques d'absorption de chocs et de dissipation de l'énergie sont obtenues avec une épaisseur d'alliage fortement réduite par rapport aux matériaux de l'état de l'art et en particulier par rapport à une mousse expansée. Ceci permet de réaliser par exemple des équipements à absorption de chocs, tels que des équipements de sécurité et/ou de protection d'un individu, simples et pratiques d'utilisation, de faible épaisseur, et qui n'entravent pas l'individu qui les utilise (voire qui les revêt dans le cas d'un vêtement) dans ses mouvements.

### La composition chimique

L'alliage de polymères nanostructuré est obtenu à partir d'une composition chimique comprenant un mélange de monomère(s) (méth)acrylique(s), ce dernier comprenant lui-même un ou plusieurs monomère(s) (méth)acrylique(s).

La composition chimique comprend en outre un polyborodiméthylsiloxane (PBDMS), ainsi qu'au moins un amorceur de polymérisation destiné à amorcer la polymérisation du mélange de monomère (méth)acrylique pour former la matrice polymère (méth)acrylique de l'alliage.

Le PBDMS est avantageusement soluble dans le mélange de monomère (méth)acrylique, de manière à former une solution de PBDMS dans le mélange de monomère (méth)acrylique. Ceci permet, après polymérisation du mélange monomère, et préférablement après réticulation des polymères (méth)acryliques formés, d'obtenir une répartition homogène du réseau de PBDMS dans l'ensemble du réseau (méth)acrylique de l'alliage.

Le mélange de monomère (méth)acrylique comprend un ou plusieurs monomère(s) (méth)acrylique(s). Le monomère (méth)acrylique comprend un ou plusieurs monomères méthacryliques et/ou un ou plusieurs monomères acryliques.

Le monomère (méth)acrylique peut être choisi parmi : les acides acrylique et méthacrylique, les sels des acides acrylique et méthacrylique, les esters formés à partir des acides acrylique et méthacrylique, ou encore les acrylates d'alkyle et les méthacrylates d'alkyles.

De préférence, le monomère (méth)acrylique est choisi parmi : le méthacrylate de méthyle, le méthacrylate d'éthyle, l'acrylate de méthyle, l'acrylate d'éthyle, l'acide méthacrylique, l'acide acrylique, l'acrylate de butyle, le méthacrylate de n-octyle, le méthacrylate d'isobutyle, le méthacrylate de n-butyle et leurs mélanges.

De préférence, le monomère (méth)acrylique est un acrylate d'alkyle ou un méthacrylate d'alkyle choisi parmi : le méthacrylate de méthyle, le méthacrylate d'éthyle, l'acrylate de méthyle, l'acrylate d'éthyle, l'acrylate de butyle, le méthacrylate de butyle, et leurs mélanges.

Par ailleurs, le ratio massique de la masse de monomère (méth)acrylique par rapport à la somme des masses du monomère (méth)acrylique et du polyborodiméthylsiloxane (PBDMS) est de préférence compris entre 30 % et 70 %.

Le ratio massique de la masse de polyborodiméthylsiloxane (PBDMS) par rapport à la somme des masses du monomère (méth)acrylique et du polyborodiméthylsiloxane (PBDMS) est de préférence compris entre 30 % et 70 %.

On préférera tout particulièrement que le polyborodiméthylsiloxane (PBDMS) et le monomère (méth)acrylique soient dans des proportions massiques de 30 % / 70 % respectivement l'un par rapport à l'autre.

Les valeurs des proportions massiques du PBDMS par rapport au monomère (méth)acrylique doivent être choisies judicieusement. En effet, une masse de PBDMS trop élevée par rapport à celle du monomère (méth)acrylique provoque un risque d'écoulement du PBDMS hors de la matrice (méth)acrylique, ce qui déstabilise la structure de l'alliage. Au contraire, une masse de PBDMS trop faible par rapport à celle du monomère (méth)acrylique provoque une baisse significative des propriétés d'absorption de l'énergie de l'alliage.

L'amorceur de polymérisation est quant à lui choisi en fonction des monomères (méth)acryliques à polymériser.

De préférence, l'amorceur de polymérisation est un photoamorceur, en ce qu'il permet d'amorcer la réaction de polymérisation lorsqu'il est exposé à la lumière, en particulier à un rayonnement ultra-violet. La réaction de polymérisation est alors une polymérisation radicalaire.

On préférera une teneur en amorceur de polymérisation comprise entre 0,1 % et 5 % en masse, par rapport à la masse de monomère (méth)acrylique.

Par ailleurs, la composition chimique comprend optionnellement au moins un agent réticulant, également désigné en tant qu'agent pontant. Un agent réticulant désigne une espèce chimique apte à former des liaisons entre plusieurs chaînes de polymères. L'agent réticulant permet de réticuler les chaînes du ou des polymère(s) (méth)acryliques afin que la matrice (méth)acrylique forme un réseau (méth)acrylique réticulé.

Par définition, l'agent réticulant comprend des fonctions chimiques réactives similaires à celles des chaînes du ou des polymère(s) (méth)acryliques qu'il doit réticuler.

De manière avantageuse, la teneur de l'agent réticulant est comprise entre 1 % et 10 % en masse, par rapport à la masse de monomère (méth)acrylique.

La présence de l'agent réticulant contribue, avec la solubilité du PBDMS dans le mélange monomère (méth)acrylique pour former une solution, à l'obtention d'un alliage de polymères nanostructuré dans lequel le réseau de PBDMS est réparti dans l'ensemble du réseau (méth)acrylique, et dans lequel les deux réseaux précédents sont bien imbriqués l'un dans l'autre. On obtient dès lors un alliage de polymères nanostructuré possédant des propriétés d'absorption de chocs encore améliorées.

La composition chimique peut optionnellement comprendre des charges et/ou des additifs.

Les charges permettent d'améliorer la résistance mécanique de l'alliage. Elles peuvent être minérales ou organiques. On pourra choisir par exemple des charges pour la résistance à l'abrasion, ou bien des retardateurs de flammes.

Les additifs quant à eux permettent d'améliorer notamment l'aspect visuel, la maniabilité, la texture, ou encore la durée de vie l'alliage. On pourra choisir par exemple des colorants, des agents bactéricides ou fongicides, ou encore des agents de surface.

### Le procédé de fabrication d'une pièce en alliage nanostructuré

Un autre objet de l'invention concerne un procédé de fabrication d'une ou plusieurs pièce(s) en alliage de polymères nanostructuré, possédant des propriétés mécaniques d'absorption de chocs, à partir de la composition chimique décrite précédemment.

Ce procédé comprend les étapes suivantes :
- la polymérisation du mélange de monomère (méth)acrylique de la composition chimique afin de former un alliage de polymères nanostructuré,
- la mise en forme de l'alliage de polymères nanostructuré pour obtenir une pièce en alliage nanostructuré.

La mise en forme de l'alliage nanostructuré peut être réalisée simultanément avec la polymérisation, ou postérieurement à la polymérisation du mélange monomère (méth)acrylique. Elle peut par exemple être réalisée par moulage ou par extrusion, notamment par extrusion réactive.

Le procédé de fabrication d'une pièce en alliage nanostructuré comprend optionnellement une étape de réticulation du ou des polymère(s) (méth)acryliques obtenus par polymérisation du mélange de monomère (méth)acrylique. L'étape de réticulation est réalisée consécutivement à la polymérisation du mélange de monomère (méth)acrylique. En pratique, ces deux étapes sont souvent réalisées quasi-simultanément.

### Le procédé de fabrication d'une pièce composite

Un autre objet de l'invention concerne un procédé de fabrication d'une ou plusieurs pièce(s) composite(s) à partir de la composition chimique décrite précédemment et d'un substrat.

Ce procédé comprend les étapes suivantes :
- l'imprégnation d'un substrat par la composition chimique,
- la polymérisation du mélange monomère (méth)acrylique de la composition chimique imprégnant le substrat pour former un matériau composite,
- la mise en forme du matériau composite pour obtenir une pièce composite.

On précise qu'un « matériau composite » correspond à une combinaison d'au moins deux composants non miscibles. Un effet de synergie est obtenu par une telle combinaison, de sorte qu'un matériau composite possède des propriétés, notamment mécaniques, que chacun des composants seuls ne possède pas, ou possède à un degré inférieur au matériau composite. En l'espèce, la pièce composite comprend un premier composant constitué du substrat, et un second composant constitué de l'alliage de polymères nanostructuré.

Le substrat peut être un substrat fibreux en ce qu'il est constitué de fibres, telles que des fibres textiles par exemple.

L'imprégnation du substrat par la composition chimique est de préférence réalisée par enduction ou par trempage.

La mise en forme du matériau composite peut être réalisée simultanément avec la polymérisation du mélange monomère (méth)acrylique, ou postérieurement à la polymérisation du mélange monomère (méth)acrylique.

La mise en forme du matériau composite peut par exemple être réalisée par moulage ou par extrusion, notamment par extrusion réactive.

Le procédé de fabrication d'une pièce composite comprend optionnellement une étape de réticulation du ou des polymère(s) (méth)acryliques obtenus par polymérisation du mélange de monomère (méth)acrylique. L'étape de réticulation est réalisée consécutivement à la polymérisation du mélange de monomère (méth)acrylique. En pratique, ces deux étapes sont souvent réalisées quasi-simultanément.

Les pièces en alliage nanostructuré et les pièces composites obtenues par leurs procédés de fabrication respectifs permettent de réaliser des équipements à absorption de chocs.

De tels équipements peuvent être réalisées à partir d'une seule pièce en alliage ou composites, ou par assemblage de plusieurs pièces en alliage et/ou composites.

Ces équipements sont de préférence des équipements de protection d'un individu contre les chocs engendrés par des éléments de son environnement. Ils sont de préférence destinés à être portés ou revêtus par un individu. Ils peuvent alternativement recouvrir un objet ou être constitutif d'un tel objet destiné à entrer en contact avec un individu.

On peut notamment citer des équipements de sport tels que des vêtements techniques, des selles de vélo ou de cheval, des manches et cadres de raquettes par exemple, ou des équipements de sécurité assurant l'intégrité physique d'un individu tels que des gilets pare-balles, ou des harnais de sécurité par exemple.

On préférera tout particulièrement des pièces en alliage nanostructuré et/ou composites pour la fabrication de vêtements destinés à être revêtus par un individu, pour des applications diverses.

### EXEMPLE DE FABRICATION DE TISSUS IMPREGNES D'UNE COMPOSITION

### CHIMIQUE POLYMERISEE SELON L'INVENTION

### Préparation de la composition chimique

On dissout du PBDMS dans de l'acrylate d'alkyle afin d'obtenir un mélange comprenant 60 % en masse de PBDMS et 40 % en masse d'acrylate d'alkyle.

On ajoute au mélange 5 % en masse de 2,2-dimethoxy-2-phenylacétophénone (photoamorceur) par rapport à la masse d'acrylate d'alkyle.

Le monomère d'acrylate d'alkyle et le 2,2-dimethoxy-2-phenylacétophénone ont été fournis par la société Sigma Aldrich. Le PBDMS a été fourni par la société Silikony Polskie.

Préparation d'échantillons de tissus imprégnés de la composition chimique précédente

On prépare des échantillons de tissus sous forme de carrés de dimensions 15 cm x 15 cm. Les tissus sont deux types de tissus synthétiques : nylon de couleur noire et mélange élasthanne/polyéthylène (20/80 massique) de couleur blanche. On obtient ainsi deux échantillons de tissus expérimentaux destinés à être imprégnés de la composition chimique précédente, et deux échantillons de tissus témoins.

On fixe les deux échantillons de tissus expérimentaux sur un support en les tendant suffisamment de manière à rendre leur surface parfaitement plane.

On imprègne ensuite chaque échantillon de tissu expérimental avec la composition chimique par enduction, afin de recouvrir entièrement sa surface de manière homogène.

Les échantillons de tissus imprégnés sont ensuite passés sous lampe UV pendant 30 secondes.

Les résultats visuels et rhéologiques des deux échantillons de tissus imprégnés sont récapitulés dans le Tableau I ci-dessous. Les résultats visuels et rhéologiques des deux échantillons de tissus témoins qui n'ont pas été imprégnés sont également indiqués, à fréquence au pic identique aux tissus imprégnés, à titre de comparaison avec ces derniers.

**Tableau I**

| **Echantillon** | **Aspect visuel** | **Rhéologie** | | | |
|---|---|---|---|---|---|
| | | G' au pic (kPa) | G" au pic (kPa) | Tan 6 au pic (-) | Fréquence au pic (Hz) |
| **Nylon non imprégné** | Tissu de couleur noire | 151,0 | 97,1 | 0,644 | 0,464 |
| **Nylon imprégné** | Dépôt de polymère blanc en surface du nylon. | 18,3 | 17,8 | 0,976 | 0,464 |
| **Elasthanne/PE (20/80) tissu blanc non imprégné** | Tissu de couleur blanche | 113,7 | 57,9 | 0,509 | 0,464 |
| **Elasthanne/PE (20/80) tissu blanc imprégné** | Pas de trace visuelle de la composition. | 15,4 | 13,1 | 0,852 | 0,464 |

Dans le Tableau I, G' correspond au module élastique (ou module de conservation) du tissu imprégné. La valeur du module élastique permet de caractériser l'intensité avec laquelle un matériau sollicité mécaniquement, par un choc par exemple, stocke puis restitue l'énergie due à la sollicitation.

G" correspond au module visqueux (ou module de perte) du tissu imprégné. La valeur du module visqueux permet de caractériser l'intensité avec laquelle un matériau sollicité mécaniquement, par un choc par exemple, dissipe l'énergie due à la sollicitation, sous forme de chaleur.

Tan δ correspond au rapport G"/G' entre le module élastique et le module visqueux, et est également appelée « déphasage ». La valeur du déphasage permet de caractériser le comportement prédominant du matériau : elle tendra vers 0 dans le cas d'un solide, tandis qu'elle tendra vers l'infini dans le cas d'un fluide non newtonien.

La fréquence f correspond à la fréquence de sollicitation du matériau (lors d'un choc par exemple).

Les valeurs de G', G", et Tan δ, présentées dans le Tableau I sont mesurées pour une fréquence f au pic égale à 0,464 Hz.

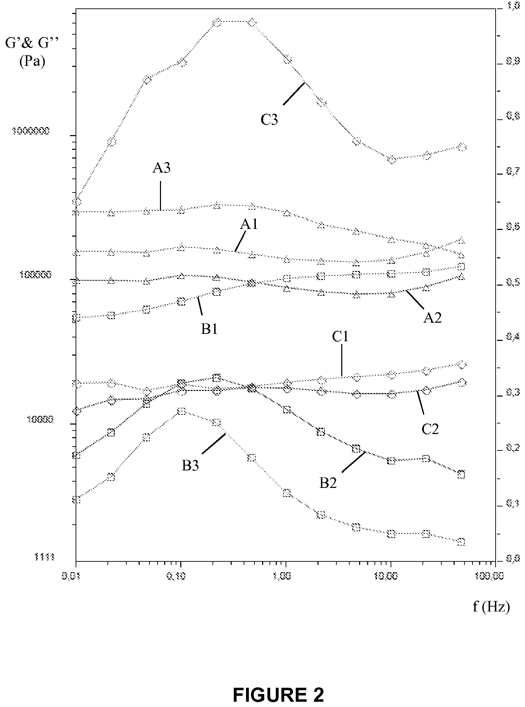

### En référence à la Figure 2 et au Tableau I :

Avec les courbes de la Figure 2 représentant :
A1 : G'- Nylon non imprégné
A2 : G"- Nylon non imprégné
A3 : Tan δ - Nylon non imprégné
B1 : G'- Composition
B2 : G"- Composition
B3 : Tan δ - Composition
C1 : G'- Nylon imprégné
C2 : G"- Nylon imprégné
C3 : Tan δ - Nylon imprégné

- La courbe C1 est inférieure aux courbes A1 et B1 sur la totalité de la plage de fréquence représentée. En particulier, G' au pic pour le nylon imprégné (18,3 kPa) est inférieur à G' au pic pour le nylon non imprégné (151 kPa).
- La courbe C2 est inférieure à la courbe A2 sur la totalité de la plage de fréquence représentée. En particulier, G" au pic pour le nylon imprégné (17,8 kPa) est inférieur à G" au pic pour le nylon non imprégné (97,1 kPa). La courbe C2 est inférieure à la courbe B2 sur l'intervalle de fréquence [0,01 ; 0,10[ U ]0,50 ; 50] Hz, et supérieure à la courbe B2 sur l'intervalle de fréquence [0,10 ; 0,50].
- La courbe C3 est supérieure aux courbes A3 et B3 sur la totalité de la plage de fréquence représentée. En particulier, Tan δ au pic pour le nylon imprégné (0,976) est supérieure à Tan δ au pic pour le nylon non imprégné (0,644).

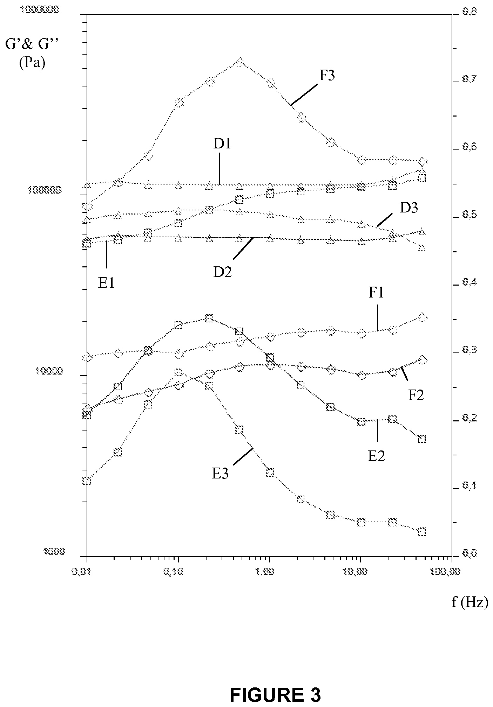

### En référence à la Figure 3 et au Tableau I :

Avec les courbes de la Figure 3 représentant :
D1 : G'- Elasthanne/PE non imprégné
D2 : G"- Elasthanne/PE non imprégné
D3 : Tan δ - Elasthanne/PE non imprégné
E1 : G'- Composition
E2 : G"- Composition
E3 : Tan δ - Composition
F1 : G'- Elasthanne/PE imprégné
F2 : G"- Elasthanne imprégné
F3 : Tan δ - Elasthanne imprégné

- La courbe F1 est inférieure aux courbes D1 et E1 sur la totalité de la plage de fréquence représentée. En particulier, G' au pic pour le tissu Elasthanne/PE imprégné (15,4 kPa) est inférieur à G' au pic pour le tissu Elasthanne/PE non imprégné (113,7 kPa).
- La courbe F2 est inférieure à la courbe D2 sur la totalité de la plage de fréquence représentée. En particulier, G" au pic pour le tissu Elasthanne/PE imprégné (13,1 kPa) est inférieur à G" au pic pour le tissu Elasthanne/PE non imprégné (57,9 kPa). La courbe F2 est supérieure à la courbe E2 sur l'intervalle de fréquence [0,01 ; 0,012[ U ]1,2 ; 50] Hz, et inférieure à la courbe E2 sur l'intervalle de fréquence [0,012 ; 1,2] Hz.
- La courbe F3 est supérieure aux courbes D3 et E3 sur la totalité de la plage de fréquence représentée. En particulier, Tan δ au pic pour le tissu Elasthanne/PE imprégné (0,852) est supérieur à Tan δ au pic pour le tissu Elasthanne/PE non imprégné (0,509).

En conclusion, l'imprégnation des tissus de nylon et d'Elasthanne/PE entraîne une chute des modules élastique G' et visqueux G" comparativement aux tissus non imprégnés et à la composition chimique pris isolément.

En revanche, l'imprégnation des tissus de nylon et d'Elasthanne/PE entraine également une augmentation du déphasage Tan δ dont les courbes C3 et F3 présentent un pic prononcé, contrairement aux courbes A3 et D3 des tissus non imprégnés. Tan δ atteint ainsi des valeurs proches de 1, ce qui indique que les tissus imprégnés selon l'invention possèdent une forte capacité à dissiper l'énergie reçue lors d'une sollicitation mécanique, ce qui en fait d'excellentes pièces composites pour la fabrication d'équipements de protection et/ou de sécurité à absorption de chocs.

### REFERENCES

- US 2005/037189
- US 2012/142239

## Revendications

1. Alliage de polymères nanostructuré à absorption de chocs, comprenant :
• une matrice polymère (méth)acrylique comprenant un ou plusieurs polymère(s) (méth)acrylique(s), ladite matrice polymère (méth)acrylique formant un réseau (méth)acrylique, et,
• au moins un polyborodiméthylsiloxane (PBDMS) réparti dans la matrice polymère (méth)acrylique, le polyborodiméthylsiloxane formant un réseau,
le réseau de polyborodiméthylsiloxane et le réseau (méth)acrylique étant imbriqués l'un dans l'autre.

2. Alliage selon la revendication 1, **caractérisé en ce que** la matrice polymère (méth)acrylique forme un réseau (méth)acrylique réticulé.

3. Alliage selon l'une des revendications 1 ou 2, **caractérisé en ce que** le polymère (méth)acrylique est un polyacrylate d'alkyle ou un polyméthacrylate d'alkyle choisi parmi : le polyméthacrylate de méthyle, le polyméthacrylate d'éthyle, le polyacrylate de méthyle, le polyacrylate d'éthyle, le polyacrylate de butyle, le polyméthacrylate de butyle, et leurs mélanges.

4. Composition chimique pour la fabrication d'un alliage de polymères nanostructuré à absorption de chocs selon l'une des revendications précédentes, **caractérisée en ce qu'**elle comprend :
• un mélange de monomère (méth)acrylique comprenant un ou plusieurs monomère(s) (méth)acrylique(s),
• au moins un polyborodiméthylsiloxane (PBDMS),
• au moins un amorceur de polymérisation, destiné à amorcer la polymérisation du mélange de monomère (méth)acrylique afin de former une matrice polymère (méth)acrylique.

5. Composition chimique selon la revendication 4, **caractérisée en ce qu'**elle comprend en outre au moins un agent réticulant, destiné à former des liaisons chimiques entre les chaines polymères de la matrice polymère (méth)acrylique afin que ladite matrice polymère (méth)acrylique forme un réseau (méth)acrylique réticulé.

6. Composition chimique selon l'une des revendications 4 à 5, **caractérisée en ce que** le ratio massique de la masse de monomère (méth)acrylique par rapport à la somme des masses du monomère (méth)acrylique et du polyborodiméthylsiloxane (PBDMS) est compris entre 30% et 70%.

7. Composition chimique selon l'une des revendications 4 à 6, **caractérisée en ce que** le ratio massique de la masse de polyborodiméthylsiloxane (PBDMS) par rapport à la somme des masses du monomère (méth)acrylique et du polyborodiméthylsiloxane (PBDMS) est compris entre 30% et 70%.

8. Composition chimique selon l'une des revendications 4 à 5, **caractérisée en ce que** le polyborodiméthylsiloxane (PBDMS) et le monomère (méth)acrylique sont en proportion massique de 30% / 70% respectivement l'un par rapport à l'autre.

9. Composition chimique selon l'une des revendications 5 à 8, **caractérisée en ce que** la teneur de l'agent réticulant est comprise entre 1% et 10% en masse par rapport à la masse de la matrice monomère (méth)acrylique.

10. Composition chimique selon l'une des revendications 4 à 9, **caractérisée en ce que** l'amorceur de polymérisation est un photoamorceur dont la teneur est comprise entre 0,1% et 5% en masse, par rapport à la masse de la matrice monomère (méth)acrylique.

11. Procédé de fabrication d'une pièce en alliage nanostructuré à absorption de chocs, à partir d'une composition chimique selon l'une des revendications 4 à 10, **caractérisé en ce qu'**il comprend les étapes suivantes :
- la polymérisation du mélange monomère (méth)acrylique de la composition chimique pour former un alliage nanostructuré,
- la mise en forme de l'alliage nanostructuré pour obtenir une pièce en alliage nanostructuré.

12. Procédé de fabrication selon la revendication 11 **caractérisé en ce que** la mise en forme de l'alliage nanostructuré est réalisée simultanément avec la polymérisation ou postérieurement à la polymérisation du mélange de monomère (méth)acrylique.

13. Procédé de fabrication selon l'une des revendications 11 à 12, **caractérisé en ce qu'**il comprend en outre une étape de réticulation du ou des polymère(s) (méth)acryliques obtenus par polymérisation du mélange de monomère (méth)acrylique.

14. Pièce en alliage nanostructuré, **caractérisée en ce qu'**elle est obtenue par le procédé de fabrication selon l'une des revendications 11 à 13.

15. Procédé de fabrication d'une pièce composite, à partir d'une composition chimique selon l'une des revendications 4 à 10, **caractérisé en ce qu'**il comprend les étapes suivantes :
• l'imprégnation d'un substrat par la composition chimique,
• la polymérisation du mélange monomère (méth)acrylique de la composition chimique imprégnant le substrat pour former un matériau composite,
• la mise en forme du matériau composite pour obtenir une pièce composite.

16. Procédé de fabrication selon la revendication 15, **caractérisé en ce que** la mise en forme du matériau composite est réalisée simultanément avec l'imprégnation du substrat, ou simultanément avec la polymérisation du mélange monomère (méth)acrylique, ou postérieurement à la polymérisation du mélange monomère (méth)acrylique.

17. Procédé de fabrication selon l'une des revendications 15 à 16, **caractérisé en ce que** l'imprégnation du substrat est réalisée par enduction dudit substrat avec la composition chimique.

18. Procédé de fabrication selon l'une des revendications 15 à 17, **caractérisé en ce qu'**il comprend en outre une étape de réticulation du ou des polymère(s) (méth)acryliques obtenus par polymérisation du mélange de monomère (méth)acrylique.

19. Pièce composite, **caractérisée en ce qu'**elle est obtenue par le procédé de fabrication selon l'une des revendications 15 à 18.

20. Equipement à absorption de chocs, **caractérisé en ce qu'**il est réalisé à partir d'une ou de plusieurs pièce(s) en alliage nanostructuré et/ou d'une ou de plusieurs pièce(s) composite(s) selon les revendications 14 et 19.

## Patentansprüche

1. Stoßdämpfende nanostrukturierte Polymerlegierung, umfassend:
• eine (Meth)acrylpolymermatrix, umfassend ein oder mehrere (Meth)acrylpolymer(e), wobei die (Meth)acrylpolymermatrix ein (Meth)acrylnetz bildet, und,
• mindestens ein Polybordimethylsiloxan (PBDMS), das in der (Meth)acrylpolymermatrix verteilt ist, wobei das Polybordimethylsiloxan ein Netz bildet,
wobei das Polybordimethylsiloxannetz und das (Meth)acrylnetz ineinandergreifend sind.

2. Legierung nach Anspruch 1, **dadurch gekennzeichnet, dass** die (Meth)acrylpolymermatrix ein vernetztes (Meth)acrylnetz bildet.

3. Legierung nach einem der Ansprüche 1 oder 2, **dadurch gekennzeichnet, dass** das (Meth)acrylpolymer ein Alkylpolyacrylat oder ein Alkylpolymethacrylat ist, ausgewählt aus: Methylpolymethacrylat, Ethylpolymethacrylat, Methylpolyacrylat, Ethylpolyacrylat, Butylpolyacrylat, Butylpolymethacrylat und deren Gemische.

4. Chemische Zusammensetzung zur Herstellung einer stoßdämpfenden nanostrukturierten Polymerlegierung nach einem der vorstehenden Ansprüche, **dadurch gekennzeichnet, dass** sie umfasst:
• ein (Meth) acrylmonomergemisch, das ein oder mehrere (Meth)acrylmonomer(e) umfasst,
• mindestens ein Polybordimethylsiloxan (PBDMS),
• mindestens einen Polymerisationsinitiator, der dazu bestimmt ist, die Polymerisation des (Meth)acrylmonomergemisches zu initiieren, um eine (Meth)acrylpolymermatrix zu bilden.

5. Chemische Zusammensetzung nach Anspruch 4, **dadurch gekennzeichnet, dass** sie weiter mindestens ein Vernetzungsmittel umfasst, das dazu bestimmt ist, chemische Verbindungen zwischen den Polymerketten der (Meth)acrylpolymermatrix zu bilden, damit die (Meth)acrylpolymermatrix ein vernetztes (Meth)acrylnetz bildet.

6. Chemische Zusammensetzung nach einem der Ansprüche 4 bis 5, **dadurch gekennzeichnet, dass** das Masseverhältnis der (Meth)acrylmonomermasse in Bezug auf die Summe der Massen des (Meth) acrylmonomers und des Polybordimethylsiloxans (PBDMS) zwischen 30 % und 70 % enthalten ist.

7. Chemische Zusammensetzung nach einem der Ansprüche 4 bis 6, **dadurch gekennzeichnet, dass** das Masseverhältnis der Polybordimethylsiloxanmasse (PBDMS) in Bezug auf die Summe der Massen des (Meth) acrylmonomers und des Polybordimethylsiloxans (PBDMS) zwischen 30 % und 70 % enthalten ist.

8. Chemische Zusammensetzung nach einem der Ansprüche 4 bis 5, **dadurch gekennzeichnet, dass** das Polybordimethylsiloxan (PBDMS) und das (Meth)acrylmonomer jeweils zueinander in einer Masseproportion von 30 %/70 % sind.

9. Chemische Zusammensetzung nach einem der Ansprüche 5 bis 8, **dadurch gekennzeichnet, dass** der Gehalt an Vernetzungsmittel zwischen 1 Ma.-% und 10 Ma.-% in Bezug auf die Masse der (Meth)acrylpolymermatrix enthalten ist.

10. Chemische Zusammensetzung nach einem der Ansprüche 4 bis 9, **dadurch gekennzeichnet, dass** der Polymerisationsinitiator ein Photoinitiator ist, dessen Gehalt zwischen 0,1 Ma.-% und 5 Ma.-% in Bezug auf die (Meth)acrylpolymermatrix enthalten ist.

11. Verfahren zum Herstellen eines Teils aus einer stoßdämpfenden nanostrukturierten Legierung aus einer chemischen Zusammensetzung nach einem der Ansprüche 4 bis 10, **dadurch gekennzeichnet, dass** es die folgenden Schritte umfasst:
- die Polymerisation des (Meth)acrylmonomergemisches der chemischen Zusammensetzung zum Bilden einer nanostrukturierten Legierung,
- das in Form bringen der nanostrukturierten Legierung, um ein Teil aus einer nanostrukturierten Legierung zu erhalten.

12. Verfahren zum Herstellen nach Anspruch 11, **dadurch gekennzeichnet, dass** das in Form bringen der nanostrukturierten Legierung gleichzeitig mit der Polymerisation oder nach der Polymerisation des (Meth)acrylmonomergemisches realisiert wird.

13. Verfahren zum Herstellen nach einem der Ansprüche 11 bis 12, **dadurch gekennzeichnet, dass** es weiter einen Schritt zum Vernetzen des oder der durch Polymerisation des (Meth)acrylmonomergemisches erhaltenen (Meth)acrylpolymer(e)s umfasst.

14. Teil aus einer nanostrukturierten Legierung, **dadurch gekennzeichnet, dass** es durch das Verfahren zum Herstellen nach einem der Ansprüche 11 bis 13 erhalten wird.

15. Verfahren zum Herstellen eines Verbundstoffteils aus einer chemischen Zusammensetzung nach einem der Ansprüche 4 bis 10, **dadurch gekennzeichnet, dass** es die folgenden Schritte umfasst:
• Imprägnieren eines Substrats mit der chemischen Zusammensetzung,
• Polymerisieren des (Meth)acrylmonomergemisches der das Substrat imprägnierenden chemischen Zusammensetzung zum Bilden eines Verbundwerkstoffes,
• in Form bringen des Verbundwerkstoffes zum Erhalten eines Verbundstoffteils.

16. Verfahren zum Herstellen nach Anspruch 15, **dadurch gekennzeichnet, dass** das in Form bringen des Verbundwerkstoffes gleichzeitig mit dem Imprägnieren des Substrats, oder gleichzeitig mit der Polymerisation des (Meth)acrylmonomergemisches oder nach der Polymerisation des (Meth)acrylmonomergemisches realisiert wird.

17. Verfahren zum Herstellen nach einem der Ansprüche 15 bis 16, **dadurch gekennzeichnet, dass** das Imprägnieren des Substrats durch Beschichten des Substrats mit der chemischen Zusammensetzung realisiert wird.

18. Verfahren zum Herstellen nach einem der Ansprüche 15 bis 17, **dadurch gekennzeichnet, dass** es weiter einen Vernetzungsschritt des oder der durch Polymerisation des (Meth)acrylmonomergemisches erhaltenen (Meth)acrylpolymer(e)s umfasst.

19. Verbundstoffteil, **dadurch gekennzeichnet, dass** es durch das Verfahren zum Herstellen nach einem der Ansprüche 15 bis 18 erhalten wird.

20. Stoßdämpfungsausrüstung, **dadurch gekennzeichnet, dass** sie aus einem oder mehreren nanostrukturierten Legierungsteil(en) und/oder aus einem oder mehreren Verbundstoffteil(en) nach den Ansprüchen 14 und 19 realisiert wird.

## Claims

1. Shock-absorbing nanostructured polymer alloy comprising:
• a (meth)acrylic polymer matrix comprising one or more (meth)acrylic polymer(s), said (meth)acrylic polymer matrix forming a (meth)acrylic network, and,
• at least one polyborodimethylsiloxane (PBDMS) distributed in the (meth)acrylic polymer matrix, the polyborodimethylsiloxane forming a network,
the polyborodimethylsiloxane network and the (meth)acrylic network being intertwined.

2. Alloy according to claim 1, **characterised in that** the (meth)acrylic polymer matrix forms a cross-linked (meth)acrylic network.

3. Alloy according to claim 1 or claim 2, **characterised in that** the (meth)acrylic polymer is a poly(alkyl acrylate) or a poly(alkyl methacrylate) selected from: poly(methyl methacrylate), poly(ethyl methacrylate), poly(methyl acrylate), poly(ethyl acrylate), poly(butyl acrylate), poly(butyl methacrylate), and mixtures thereof.

4. Chemical composition for the manufacture of a shock-absorbing nanostructured polymer alloy according to one of the preceding claims, **characterised in that** it comprises:
• a (meth)acrylic monomer mixture comprising one or more (meth)acrylic monomer(s),
• at least one polyborodimethylsiloxane (PBDMS),
• at least one polymerisation initiator, for initiating the polymerisation of the (meth)acrylic monomer mixture to form a (meth)acrylic polymer matrix.

5. Chemical composition according to claim 4, **characterised in that** it further comprises at least one cross-linking agent for forming chemical bonds between the polymer chains of the (meth)acrylic polymer matrix so that said (meth)acrylic polymer matrix forms a cross-linked (meth)acrylic network.

6. Chemical composition according to one of claims 4 to 5, **characterised in that** the mass ratio of the mass of (meth)acrylic monomer to the sum of the masses of (meth)acrylic monomer and polyborodimethylsiloxane (PBDMS) is comprised between 30% and 70%.

7. Chemical composition according to one of claims 4 to 6, **characterised in that** the mass ratio of the mass of polyborodimethylsiloxane (PBDMS) to the sum of the masses of (meth)acrylic monomer and polyborodimethylsiloxane (PBDMS) is comprised between 30% and 70%.

8. Chemical composition according to one of claims 4 to 5, **characterised in that** polyborodimethylsiloxane (PBDMS) and (meth)acrylic monomer are in a mass proportion of 30% / 70% respectively with respect to each other.

9. Chemical composition according to one of claims 5 to 8, **characterised in that** the content of the cross-linking agent is comprised between 1% and 10% by mass based on the weight of the (meth)acrylic monomer matrix.

10. Chemical composition according to one of claims 4 to 9, **characterised in that** the polymerisation initiator is a photoinitiator the content of which is comprised between 0.1% and 5% by mass, based on the weight of the (meth)acrylic monomer matrix.

11. Process for manufacturing a shock-absorbing nanostructured alloy part from a chemical composition according to one of claims 4 to 10, **characterised in that** it comprises the following steps:
- polymerising the (meth)acrylic monomer mixture of the chemical composition to form a nanostructured alloy,
- shaping the nanostructured alloy to obtain a nanostructured alloy part.

12. Manufacturing process according to claim 11, **characterised in that** the shaping of the nanostructured alloy is carried out at the same time as, or after, the polymerisation of the (meth)acrylic monomer mixture.

13. Manufacturing process according to one of claims 11 to 12, **characterised in that** it further comprises a step of cross-linking the (meth)acrylic polymer(s) obtained by polymerising the (meth)acrylic monomer mixture.

14. Nanostructured alloy part, **characterised in that** it is obtained by the manufacturing process according to one of claims 11 to 13.

15. Process for manufacturing a composite part, from a chemical composition according to one of claims 4 to 10, **characterised in that** it comprises the following steps:
• impregnating a substrate with the chemical composition,
• polymerising the (meth)acrylic monomer mixture of the chemical composition impregnating the substrate to form a composite material,
• shaping the composite material to obtain a composite part.

16. Manufacturing process according to claim 15, **characterised in that** the shaping of the composite material is carried out simultaneously with the impregnation of the substrate, or simultaneously with the polymerisation of the (meth)acrylic monomer mixture, or after the polymerisation of the (meth)acrylic monomer mixture.

17. Manufacturing process according to one of claims 15 to 16, **characterised in that** the impregnation of the substrate is carried out by coating said substrate with the chemical composition.

18. Manufacturing process according to one of claims 15 to 17, **characterised in that** it further comprises a step of cross-linking the (meth)acrylic polymer(s) obtained by polymerising the (meth)acrylic monomer mixture.

19. Composite part, **characterised in that** it is obtained by the manufacturing process according to one of claims 15 to 18.

20. Shock-absorbing equipment, **characterised in that** it is made from one or more nanostructured alloy part(s) and/or one or more composite parts according to claims 14 and 19.
